# EUROPÄISCHE PATENTSCHRIFT

(11) **EP 0 618 602 B1**
(45) Veröffentlichungstag und Bekanntmachung des Hinweises auf die Patenterteilung: **08.01.1997**
(21) Anmeldenummer: 94102264.2
(22) Anmeldetag: 15.02.1994
(51) Int. Cl.: H01H 9/16, H01H 19/02, F24C 7/08

(54) **Schalteinrichtung für ein Elektrogerät**
Switching device for an electrical appliance
Dispositif de commutation pour un appareil électrique

(30) Priorität: 30.03.1993 DE 4310340
(43) Veröffentlichungstag der Anmeldung: 05.10.1994
(73) Patentinhaber: HURST + SCHRÖDER GMBH, D-58791 Werdohl (DE)
(72) Erfinder: Schröder, Erich, D-58791 Werdohl (DE)
(74) Vertreter: Zenz, Joachim Klaus, Dipl.-Ing.

(56) Entgegenhaltungen:
- EP-A- 0 172 576
- DE-A- 3 404 229
- DE-A- 3 901 289
- DE-A- 4 124 922
- US-A- 2 918 555

## Beschreibung

Die Erfindung betrifft eine Schaltvorrichtung für ein mehrstufig betreibbares Elektrogerät, insbesondere für eine Kochstelle oder einen Backofen eines Elektroherdes, mit einem die Betriebsstufen des Elektrogerätes steuernden Bedienungselement und mit einer die Betriebsstufen anzeigenden Sichtanzeige. Eine solche Schaltvorrichtung ist z.B. in EP-A-0172576 beschrieben.

Bei Schalteinrichtungen dieser Art für moderne Elektrogeräte arbeitet die Sichtanzeige elektronisch. Neben der fortschrittlich gestalteten Optik bringt diese Art der Steuerung den Vorteil mit sich, daß der auffallende Wechsel der LED-Anzeige den Benutzer deutlich darauf hinweist, daß ein Schaltvorgang stattgefunden hat. Allerdings sind kostengünstige elektronische Steuerungen nur begrenzt temperaturfest. Die Obergrenze liegt bei etwa 70°C. Da die Sichtanzeige ein für die Funktion des Elektrogerätes sekundäres Detail darstellt, sind entsprechende Kostenbegrenzungen gegeben.

Der Erfindung liegt die Aufgabe zugrunde, die eingangs genannte Schalteinrichtung derart weiterzuentwickeln, daß die Sichtanzeige unter kostengünstiger Gestaltung und ohne Beeinträchtigung der Anzeigefunktion höheren Temperaturen standhält.

Zur Lösung dieser Aufgabe umfaßt die Schalteinrichtung nach der Erfindung einen mechanisch mit dem Bedienungselement gekoppelten, verstellbaren Informationsträger mit durchscheinenden Zeichen, eine vor dem Informationsträger angeordnete Blende mit einem Sichtfenster für die Zeichen des Informationsträgers, eine hinter dem Informationsträger angeordnete Lichtquelle und einen mechanisch mit dem Bedienungselement und elektrisch mit der Lichtquelle gekoppelten Schalter zum Steuern der Lichtquelle in Abhängigkeit von den Betriebsstufen des Elektrogerätes, wobei der Schalter derart mit dem Bedienungselement und der Lichtquelle gekoppelt ist, daß die Lichtquelle bei jedem Betriebsstufenwechsel aus- und wieder eingeschaltet wird.

Diese mechanische Steuerung läßt sich in äußerst kostengünstiger Weise so auslegen, daß sie Temperaturen bis zu 120°C und mehr standhält. Dabei weist das Aus- und Einschalten der Lichtquelle durch abrupte Helligkeitsunterschiede den Benutzer deutlich darauf hin, daß ein Betriebsstufenwechsel stattgefunden hat. Dies gilt für sämtliche Einschaltstufen des Elektrogerätes, nach Wahl jedoch auch für den Übergang zur Nullstellung. Bei entsprechender Gestaltung der Zeichen des Informationsträger kann ohne weiteres eine Siebensegmentanzeige simuliert werden. Dies kann, abweichend von den Möglichkeiten einer LED-Anzeige, sogar in jeder beliebigen Farbe geschehen, und zwar sowohl durch entsprechende Gestaltung der Zeichen als auch durch Einfärbung der Lichtquelle. Ferner ist ohne weiteres eine Mehrfarbigkeit erzielbar. Als weiterer Vorteil der Erfindung ergibt sich, daß beliebige Symbole angezeigt werden können.

Vor allen Dingen läßt sich die Schalteinrichtung ohne weiteres unter Ceranplatten anordnen, was bisher aus Temperaturgründen bei elektronischer Sichtanzeige nicht möglich war. Die jeweiligen Betriebsstufen bzw. entsprechende Symbole werden dabei in sehr wirksamer Weise direkt in der Ceranplatte angezeigt. Die Sichtblende mit dem Rand des Sichtfensters verschwindet völlig.

Um den jeweiligen Betriebsstufenwechsel noch deutlicher zu machen, wird in Weiterbildung der Erfindungvorgeschlagen, das Bedienungselement mit einem akustischen Signalgeber zu koppeln. Dieser kann im einfachsten Falle von der Rasterung für die einzelnen Einstellungen des Bedienungselementes gebildet werden.

Die Position, an der die Zeichen des Informationsträgers angezeigt werden, kann beliebig gewählt werden. Voraussetzung ist eine entsprechende Ausbildung des Informationsträgers und dessen entsprechende mechanische Kopplung mit dem Bedienungselement. Beispielsweise kommt als Informationsträger ein umlaufendes Band in Frage.

Eine ganz besonders einfache Konstruktion zeichnet sich dadurch aus, daß das Bedienungselement als Drehknopf ausgebildet und auf einer Welle angeordnet ist, daß der Informationsträger als Scheibe ausgebildet und auf der Welle des Drehknopfes angeordnet ist und daß der Schalter einen auf einer Leiterplatte arbeitenden Drehfinger aufweist, der auf der Welle des Drehknopfes angeordnet ist. Die Anzeige erscheint relativ dicht neben dem Drehknopf und ermöglicht damit einen extrem kostengünstigen Gesamtaufbau. Dies gilt ebenso für den Schalter. Allerdings ist ohne weiteres auch ein Mikroschalter denkbar, der über ein kleines Zwischengetriebe angetrieben wird.

Als erfindungswesentlich offenbart gelten auch solche Kombinationen der erfindungsgemäßen Merkmale, die von den vorstehend diskutierten Verknüpfungen abweichen.

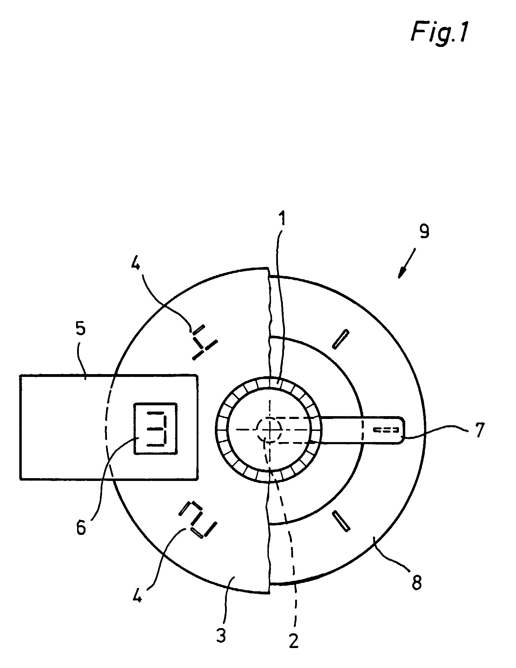

Die Erfindung wird im folgenden anhand eines bevorzugten Ausführungsbeispiels im Zusammenhang mit der beiliegenden Zeichnung näher erläutert. Die Zeichnung zeigt schematisch einen Grundriß der Schalteinrichtung.

Die Schalteinrichtung umfaßt ein Bedienungselement 1 in Form eines Drehknopfes, welcher mit einer Welle 2 verbunden ist. Auf der Welle 2 ist ferner ein Informationsträger 3 in Form einer Drehscheibe angeordnet. Die Drehscheibe ist mit durchscheinendem Zeichen 4 versehen, die von einer nicht dargestellten, hinter der Drehscheibe angeordneten Lichtquelle beleuchtet werden können. Vor der Drehscheibe befindet sich eine Sichtblende 5 mit einem Sichtfenster 6, wobei die Anordnung so getroffen ist, daß die durchscheinenden Zeichen 4 im Sichtfenster auftauchen und somit die Position des Bedienungselementes 1 anzeigen. Diese Position entspricht einer Betriebsstufe eines vom Bedienungselement gesteuerten Elektrogerätes, im vorliegenden Falle einer Kochstelle eines Elektroherdes.

Die Welle 2 des Bedienungselementes 1 trägt ferner einen Drehfinger 7, der zusammen mit einer Leiterplatte 8 einen Schalter 9 für die nicht dargestellte Lichtquelle bildet.

Die Anordnung ist so getroffen, daß bei jeder durch Drehung des Bedienungselementes 1 bewirkten Änderung der Betriebsstufe des Elektrogerätes die nicht dargestellte Lichtquelle ausgeschaltet und sodann erneut eingeschaltet wird. Während der Ausschaltzeit erfolgt der Wechsel der Zeichen 4 des Informationsträgers 3 im Sichtfenster 6 der Blende 5. Auf diese Weise wird der Schaltvorgang sehr deutlich angezeigt, und zwar unter Simulation des Umschaltens einer LED-Anzeige.

Die erfindungsgemäße Anordnung ist einfach und wirtschaftlich in der Herstellung, dabei zuverlässig im Betrieb und vor allen Dingen temperaturfest. Sie kann ohne weiteres in ein Ceranfeld eines Kochherdes integriert werden. Im Rahmen der Erfindung sind durchaus Abwandlungsmöglichkeiten gegeben. So kann der Schalter 9 als Mikroschalter ausgebildet sein, der über ein kleines Getriebe an die Welle 2 des Bedienungselementes 1 angeschlossen ist. Ferner kann der Informationsträger 3 eine abweichende Form besitzen, beispielsweise die eines umlaufenden Bandes. Während die Zeichen 4 des Informationsträgers 3 im vorliegenden Falle Ziffern sind, kommen ohne weiteres beliebige andere Symbole in Frage, die nach Wunsch ebenfalls wie LED-Anzeigen aufgebaut sein können. Die Farbe der Zeichen 4 kann beliebig gewählt werden, sei es über eine entsprechende Ausbildung im Informationsträger 3, sei es über eine entsprechende Einfärbung der nicht dargestellten Lichtquelle. Im erstgenannten Fall besteht die vorteilhafte Möglichkeit einer mehrfarbigen Ausbildung. Auch kann die Mehrfarbigkeit durch Zwischenschalten eines verstellbaren Farbfilters erzielt werden.

## Patentansprüche

1. Schalteinrichtung für ein mehrstufig betreibbares Elektrogerät, insbesondere für eine Kochstelle oder einen Backofen eines Elektroherdes, mit einem die Betriebsstufen des Elektrogerätes steuernden Bedienungselement (1) und mit einer die Betriebsstufen anzeigenden Sichtanzeige,
mit einem mechanisch mit dem Bedienungselement (1) gekoppelten, verstellbaren Informationsträger (3) mit durchscheinenden Zeichen (4),
mit einer vor dem Informationsträger (3) angeordnete Blende (5) mit einem Sichtfenster (6) für die Zeichen (4) des Informationsträgers (3), und
mit einer hinter dem Informationsträger (3) angeordnete Lichtquelle, gekennzeichnet durch
einen mechanisch mit dem Bedienungselement (1) und elektrisch mit der Lichtquelle gekoppelten Schalter (9) zum Steuern der Lichtquelle in Abhängigkeit von den Betriebsstufen des Elektrogerätes, wobei der Schalter derart mit dem Bedienungselement und der Lichtquelle gekoppelt ist, daß die Lichtquelle bei jedem Betriebsstufenwechsel aus- und wieder eingeschaltet wird.

2. Schalteinrichtung nach Anspruch 1, gekennzeichnet durch einen mechanisch mit dem Bedienungselement (1) gekoppelten akustischen Signalgeber zum Anzeigen der Betriebsstufenwechsel.

3. Schalteinrichtung nach Anspruch 1 oder 2, dadurch gekennzeichnet, daß das Bedienungselement (1) als Drehknopf ausgebildet und auf einer Welle (2) angeordnet ist, daß der Informationsträger (3) als Scheibe ausgebildet und auf der Welle (2) des Drehknopfes angeordnet ist und daß der Schalter (9) einen auf einer Leiterplatte (8) arbeitenden Drehfinger (7) aufweist, der auf der Welle (2) des Drehknopfes angeordnet ist.

## Claims

1. Switching device for an electrical device which is operable in a number of stages, particularly for a cooking ring or an oven of an electric stove, with an operating element (1), which controls the operational stages of the electrical device, and with a visual display, which indicates the operational stages, with a movable information carrier (3), which is mechanically coupled to the operating element (1), bearing translucent symbols (4), with a shield (5), which is arranged in front of the information carrier (3), with a viewing window (6) for the symbols (4) on the information carrier (3) , and with a light source arranged behind the information carrier (3), characterised by a switch (9), which is mechanically coupled to the operating element (1) and electrically coupled to the light source, for controlling the light source in dependence on the operational stages of the electrical device, the switch being so coupled to the operating element and the light source that the light source is switched off and on again each time the operational stage is changed.

2. Switching device as claimed in claim 1, characterised by an acoustic signal emitter, which is mechanically coupled to the operating element (1), for indicating the changes in the operational stages.

3. Switching device as claimed in claim 1 or 2, characterised in that the operating element (1) is constructed as a rotary knob and is arranged on a shaft (2), that the information carrier (3) is constructed as a disc and is arranged on the shaft (2) of the rotary knob and that the switch (9) has a rotary finger (7), operating on a conductive plate (8), which is arranged on the shaft (2) of the rotary knob.

## Revendications

1. Dispositif de commutation pour appareil électrique à plusieurs échelons de marche, en particulier pour foyer de cuisson ou four de cuisinière électrique, comportant un élément de commande (1) commandant les échelons de marche de l'appareil électrique et un visuel indiquant ces échelons de marche, un support d'information mobile (3) à signes translucides (4) accouplé mécaniquement avec l'élément de commande (1), un écran (5) placé devant le support d'information (3) et pourvu d'une fenêtre (6) de vision des signes (4) du support d'information (3), et une source lumineuse placée derrière le support d'information (3), caractérisé par un commutateur (9) accouplé mécaniquement avec l'élément de commande (1) et électriquement avec la source lumineuse et destiné à la commande de la source lumineuse en fonction des échelons de marche de l'appareil électrique, ce commutateur étant accouplé avec l'élément de commande et la source lumineuse de façon telle que la source lumineuse soit éteinte et rallumée à chaque changement d'échelon de marche.

2. Dispositif de commutation selon la revendication 1, caractérisé par un générateur de signaux acoustiques accouplé mécaniquement avec l'élément de commande (1) et destiné à indiquer les changements d'échelon de marche.

3. Dispositif de commutation selon l'une des revendications 1 et 2, caractérisé par le fait que l'élément de commande (1) est un bouton rotatif et est monté sur un arbre (2), que le support d'information (3) est un disque et est monté sur l'arbre (2) du bouton rotatif, et que le commutateur (9) présente un doigt rotatif (7) qui opère sur un circuit imprimé (8) et est monté sur l'arbre (2) du bouton rotatif.
